# EUROPÄISCHE PATENTSCHRIFT

(11) **EP 0 950 552 B1**
(45) Veröffentlichungstag und Bekanntmachung des Hinweises auf die Patenterteilung: **11.08.2004**
(21) Anmeldenummer: 99107300.8
(22) Anmeldetag: 14.04.1999
(51) Int. Cl.: B60G 21/055, F16F 1/38

(54) **Lagerung eines Stabilisators**
Stabiliser Support
Support de stabilisateur

(30) Priorität: 17.04.1998 DE 19817140
(43) Veröffentlichungstag der Anmeldung: 20.10.1999
(73) Patentinhaber: Bayerische Motoren Werke Aktiengesellschaft, 80788 München (DE)
(72) Erfinder: Höflschweiger, Erwin, 83059 Kolbermoor (DE); Van der Knaap, Albert, 86558 Hohenwart (DE); Spirk, Joseph, 80992 München (DE)

(56) Entgegenhaltungen:
- EP-A- 0 707 988
- DE-A- 1 912 765
- DE-C- 4 445 995
- GB-A- 2 239 440

## Beschreibung

Die Erfindung betrifft eine Lagerung eines Stabilisators gemäß dem Oberbegriff des Anspruchs 1.

Es ist bereits bekannt, zur Lagerung eines Stabilisators ein Gummiformteil zu verwenden, das den Stabilisator an der Lagerstelle kraftschlüssig umschließt und das sich an einem Fahrzeugaufbau abstützt. Ein solches Gummiformteil besitzt abhängig von der Formgebung und den Werkstoffeigenschaften Radial- und Axialfederraten, die mit Drehfederraten gekoppelt sind.

Aus der EP 0 707 988 A2 ist eine Lagerung eines Stabilisators bekannt, bei der eine Gleitschicht aus Kunststoff auf einer Oberfläche eines Elastomer- oder Gummiformteils aufgebracht ist und der Stabilisator an dieser Oberfläche anliegt. Zwar wird durch diese Bauweise die Drehfederrate verringert, dennoch weist diese Lagerung je nach Belastung und Auslegung eine unterschiedlich große Gleitreibung und eine im Vergleich dazu größere Haftreibung auf. Die Gleitreibung bewirkt ein Drehmoment und die Haftreibung bedingt ein Losbrechmoment. Ferner erzeugt eine solche "Gleitlagerung" durch Reibung Wärme, wobei die Wärme bei akustisch isolierten und mit Elastomer umhüllten Lagern durch die schlechte Wärmeableitung die Lagertemperatur beträchtlich erhöht. Dies hat den Nachteil, daß die Lebensdauer und Belastbarkeit des Lagers eingeschränkt ist. Ferner ist die Abdichtung eines solchen Lagers aufwendig, insbesondere wenn das Lager auch zur Aufnahme von Axialkräften ausgelegt ist.

Aufgabe der Erfindung ist es, eine Lagerung eines Stabilisators zu schaffen, bei der der Fahrkomfort erhöht ist.

Diese Aufgabe wird durch die Merkmale des Anspruchs 1 gelöst.

Durch die Verwendung von Wälzlagern zur Lagerung eines Stabilisators liegt eine nahezu vollständige Drehfreiheit des Stabilisators in seinen Lagerelementen vor, da die Reibung im Wälzlager nahezu Null ist. Entsprechend entfallen Kräfte aus der Federung und Dämpfung in der Drehrichtung des Stabilisators, so daß sich ein verbesserter Fahrkomfort, insbesondere hinsichtlich des Anfederungsverhaltens und der Kopierneigung, ergibt. Durch die Verwendung von Wälzlagern ist eine verbesserte Abstimmung des Lagers hinsichtlich der Akustik und des Schwingverhaltens möglich. Im Vergleich zu einer Gleitlagerung ist bei der erfindungsgemäßen Lagerung eine genauere axiale Stabilisatorpositionierung möglich.

Die in den Unteransprüchen aufgeführten Merkmale betreffen vorteilhafte Ausgestaltungen der Erfindung.

Ausführungsformen der Erfindung werden nachstehend anhand der Zeichnungen beispielshalber beschrieben. Dabei zeigen:
- Fig. 1: eine Draufsicht auf einen Stabilisator,
- Fig. 2: einen Längsschnitt einer ersten Ausführungsform einer Lagerung,
- Fig. 3: einen Längsschnitt einer zweiten Ausführungsform einer Lagerung,
- Fig. 4: einen Längsschnitt einer dritten Ausführungsform einer Lagerung,
- Fig. 5: eine Querschnittsansicht einer vierten Ausführungsform einer Lagerung und
- Fig. 6: eine Querschnittsansicht einer fünften Ausführungsform einer Lagerung.

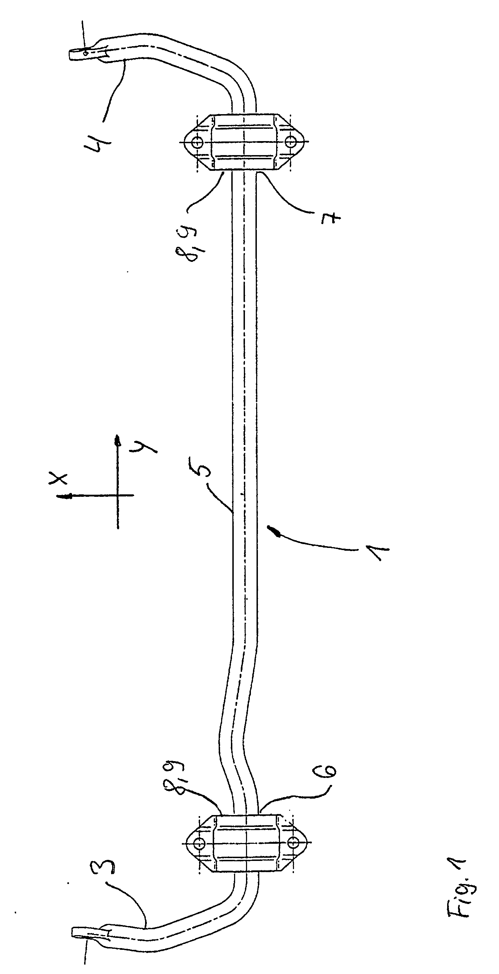

Die Fig. 1 zeigt eine Draufsicht auf einen als U-förmigen Drehstab ausgebildeten Stabilisator 1. Der Stabilisator weist abgewinkelte Arme 3, 4 auf, die sich in etwa parallel zur Längsrichtung x eines nicht abgebildeten Fahrzeuges erstrecken. Ferner besteht der Stabilisator 1 aus einem parallel zur Fahrzeugquerrichtung y verlaufenden Abschnitt 5, der über zwei Lager 8 an voneinander beabstandeten Lagerstellen 6 und 7 über einen Halter 9 an nicht beweglichen Fahrzeugteilen, wie beispielsweise dem Fahrzeugaufbau oder einem elastisch gelagerten Achsträger, befestigt sind. Die abgewinkelten Arme 3 und 4 sind an beweglichen Fahrzeugteilen, beispielsweise Fahrwerksteilen, angelenkt.

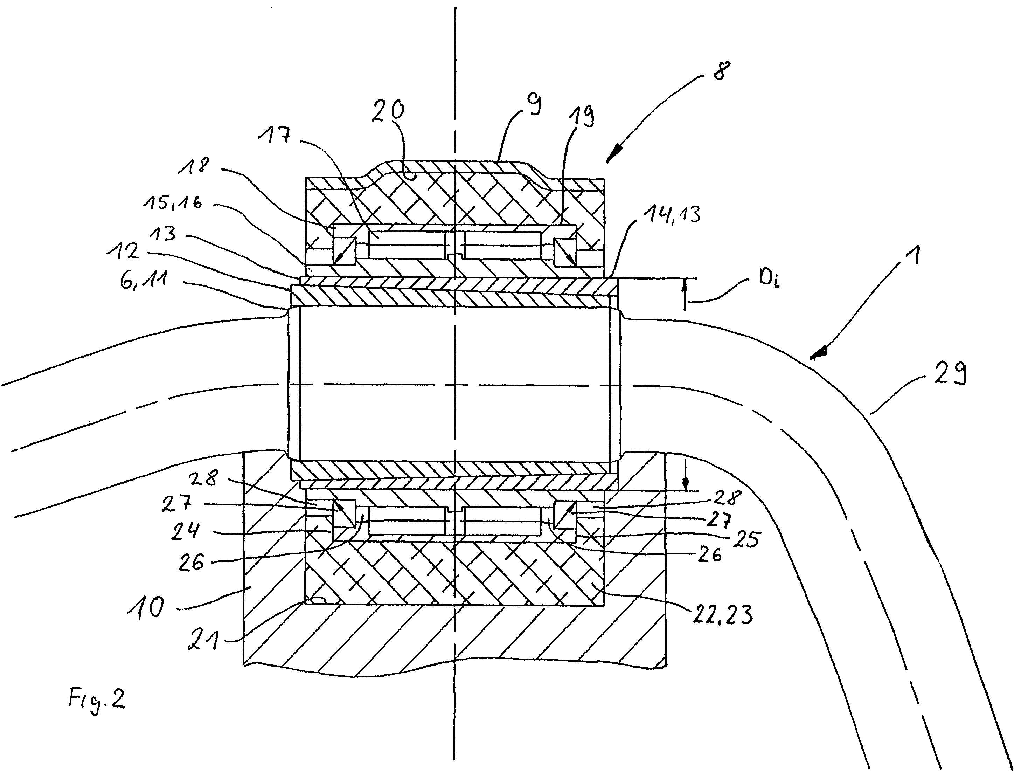

In der Fig. 2 ist ein Längsschnitt einer ersten Ausführungsform eines Lagers 8 abgebildet, das an der Lagerstelle 6 des Stabilisators 1 angeordnet ist. Das Lager 8 ist über einen Halter 9 an einem Fahrzeugaufbau 10 befestigt. An der Lagerstelle 6 weist der Stabilisator 1 eine Aufdickung 11 auf. Auf die Aufdickung 11 sind zwei miteinander verkeilte Spannhülsen 12 und 13 aufgeschoben. Die Außenoberfläche 14 der äußeren Spannhülse 13 dient als Lagersitz für einen Innenring 15 eines Wälzlagers 16. In der in der Fig. 2 gezeigten Ausführungsform sind die Wälzkörper 17 Nadeln bzw. Zylinder, die doppelreihig angeordnet sind. Das Wälzlager 16 weist ferner einen Außenring 18 auf. Zwischen einer Außenfläche 19 des Außenrings 18 und einer Innenfläche 20 des Halters 9 sowie einer Innenfläche 21 des Fahrzeugaufbaus 10 ist ein Zwischenraum 22 vorgesehen, der mit einem Elastomer 23 ausgefüllt ist. Das Wälzlager 16 weist an seinen beiden Stirnseiten 24, 25 jeweils einen Spalt 26 auf, der nach außen jeweils durch eine Dichtung 27 abgedichtet ist. Das Elastomer 23 umhüllt zumindest die Stirnseiten des Außenringes 18 sowie teilweise die Stirnseiten der Dichtungen 27. In radialer Richtung verbleibt ein Spalt 28 zwischen dem Elastomer 23 und dem Innenring 15 des Wälzlagers 16 oder dem Stabilisator 1. Ein Innendurchmesser Dᵢ des Innenringes 15 bzw. des Wälzlagers 16 ist so bemessen, daß das Wälzlager 16 um die Biegungen 29 des Stabilisators 1 herumgeführt werden kann.

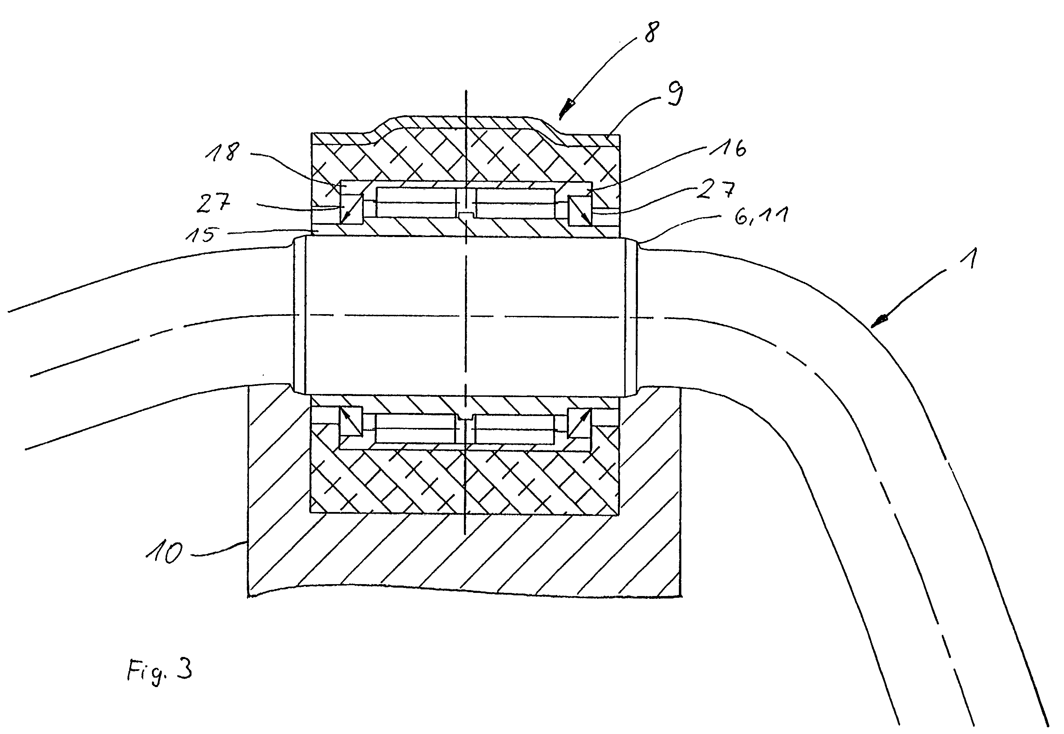

Die in der Fig. 3 dargestellte zweite Ausführungsform unterscheidet sich von der in der Fig. 2 dargestellten ersten Ausführungsform dadurch, daß die Spannhülsen 12, 13 weggelassen sind und die Aufdickung 11 als Lagersitz für den Innenring 15 des Wälzlagers 16 dient.

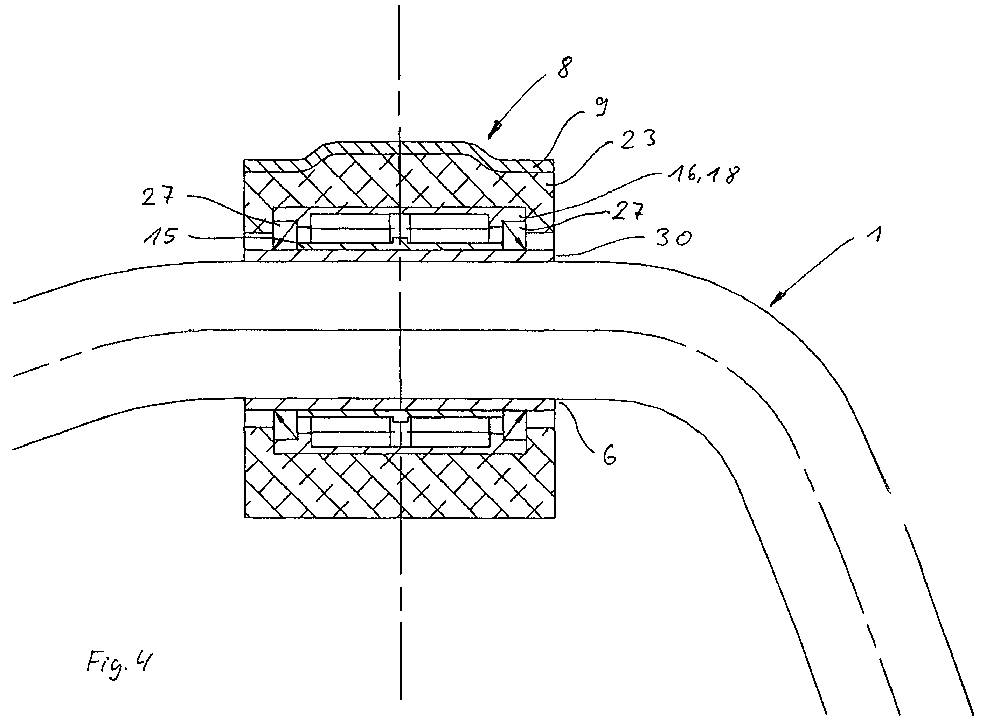

Die in der Fig. 4 abgebildete dritte Ausführungsform entspricht der in der Fig. 3 gezeigten zweiten Ausführungsform mit dem Unterschied, daß bei der dritten Ausführungsform der Stabilisator 1 keine Aufdickung 11 sondern einen Lagersitzring 30 aufweist. Der Lagersitzring 30 kann beispielsweise über einen Preßsitz an der Lagerstelle 6 am Stabilisator 1 befestigt sein.

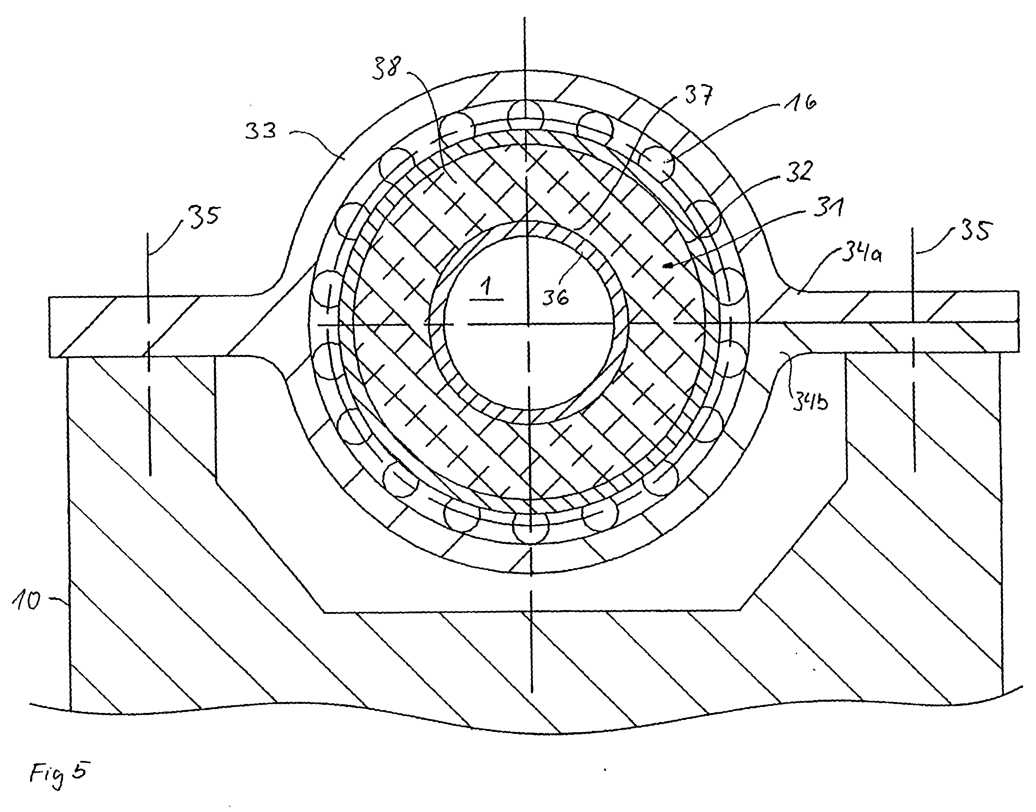

Die Fig. 5 zeigt eine vierte Ausführungsform, die sich von den vorherigen Ausführungsformen dadurch unterscheidet, daß an der betreffenden Lagerstelle 6, 7 des Stabilisators 1 ein Elastomer-Lager 31 auf dem Stabilisator 1 angeordnet ist und daß die Außenoberfläche 32 des Elastomer-Lagers 31 als Lagersitz für das Wälzlager 16 dient. Wie aus der Fig. 5 hervorgeht, besteht das Elastomer-Lager 31 aus einem Innenring 36 aus einem Festmaterial, auf dessen Außenfläche 37 das Elastomer 38 beispielsweise anvulkanisiert ist. In der linken Bildhälfte der Fig. 5 ist ein einteiliges Lagergehäuse 33 und auf der rechten Bildhälfte ein geteiltes oder zweiteiliges Lageraußengehäuse 34a und 34b jeweils mit einem Befestigungsflansch dargestellt. Das Lageraußengehäuse 33, 34a, 34b ist über Befestigungselemente 35, beispielsweise Schrauben, an dem Fahrzeugaufbau 10 befestigt.

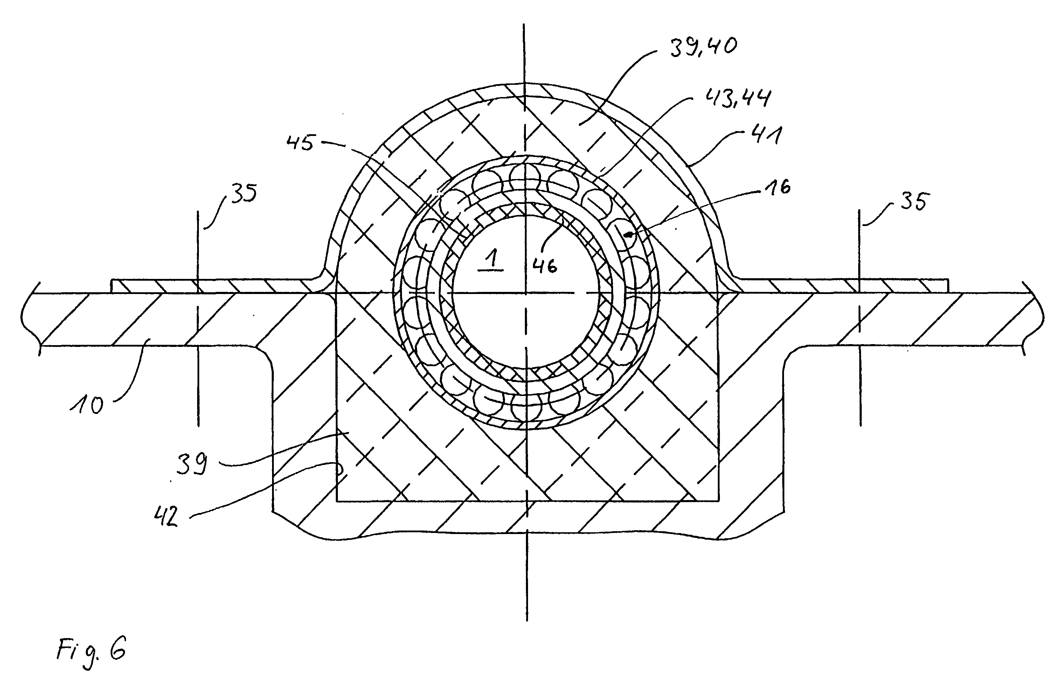

In der Fig. 6 ist eine fünfte Ausführungsform einer Lagerung für einen Stabilisator 1 gezeigt. Bei dieser Lagerung ist ein Elastomer-Lager 39 formschlüssig in einem Zwischenraum 40 angeordnet, der nach außen hin durch einen Halter 41 und einer im Fahrzeugaufbau 10 ausgebildeten Vertiefung 42 begrenzt ist. Nach innen hin ist der Zwischenraum 40 durch die Außenoberfläche 43 eines Außenringes 44 eines Wälzlagers 16 bestimmt. Ferner ist zwischen einem Innenring 45 des Wälzlagers 16 und dem Stabilisator 1 ein Elastomer-Ring 46 angeordnet, der als Lagersitz dient.

## Patentansprüche

1. Lagerung eines Stabilisators für ein Fahrzeug, wobei der Stabilisator als ein Drehstab ausgebildet ist, dessen abgewinkelte Arme an beweglichen Fahrzeugteilen angelenkt sind und dessen zwischen den abgewinkelten Armen verlaufender Abschnitt über mindestens zwei voneinander beabstandete Lager an einem unbeweglichen Fahrzeugteil angebracht ist,
**dadurch gekennzeichnet, daß** die Lager (8) jeweils mindestens ein Wälzlager (16) aufweisen, wobei das jeweilige Wälzlager (16) an seinem Außenring (18, 44) und/oder an seinem Innenring (15, 36, 45) mit einem Elastomer-Lager (23, 31, 39) umgeben ist.

2. Lagerung nach Anspruch 1,
**dadurch gekennzeichnet, daß** das Wälzlager (16) ein Kugel-, ein Schrägkugel-, ein Nadel-, ein Rollen-, ein Pendelrollen-, ein Kegelrollen- und/oder ein Tonnenlager ist.

3. Lagerung nach den Ansprüchen 1 oder 2,
**dadurch gekennzeichnet, daß** das Wälzlager (16) ein- oder mehrreihig ausgebildet ist.

4. Lagerung nach einem der vorhergehenden Ansprüche,
**dadurch gekennzeichnet, daß** das Wälzlager (16) einteilig oder mehrteilig aufgebaut ist.

5. Lagerung nach einem der vorhergehenden Ansprüche,
**dadurch gekennzeichnet, daß** die Lagerringe (15, 36, 45; 18, 44) längsund/oder quergeteilt sind und daß die dazugehörigen Lagerkäfige geteilt und/oder geschlitzt sind.

6. Lagerung nach einem der vorhergehenden Ansprüche,
**dadurch gekennzeichnet, daß** zur Fixierung des Wälzlagers (16) eine Aufdickung (11) am Stabilisator (1) vorgesehen ist.

7. Lagerung nach einem der vorhergehenden Ansprüche,
**dadurch gekennzeichnet, daß** Kunststoff an der Lagerstelle (6, 7) als Lagersitz aufgespritzt ist.

8. Lagerung nach einem der vorhergehenden Ansprüche,
**dadurch gekennzeichnet, daß** eine Buchse (30) als Lagersitz vor der Biegung des Stabilisators (1) in seine endgültige Form aufgepreßt ist.

9. Lagerung nach einem der vorhergehenden Ansprüche,
**dadurch gekennzeichnet, daß** Spannbuchsen oder Spannhülsen (12, 13) zur Fixierung des Wälzlagers vorgesehen sind.

10. Lagerung nach einem der vorhergehenden Ansprüche,
**dadurch gekennzeichnet, daß** statt eines Lagerinnenringes in die Oberfläche des Stabilisators (1) die erforderliche Anzahl von Wälzlagerlaufbahnen eingearbeitet ist.

11. Lagerung nach einem der vorhergehenden Ansprüche,
**dadurch gekennzeichnet, daß** die Fixierung des Wälzlagers (16) über einen Halter (9) oder einen einteiligen oder einen geteilten, mit Flanschen versehenen Wälzlager-Außenring (33; 34a, 34b) erfolgt.

## Claims

1. A bearing arrangement of a stabiliser for a vehicle, wherein the stabiliser is designed as a torsion bar, the bent arms of which are articulated to movable vehicle parts and the section of which extending between the bent arms is attached to an immovable vehicle part via at least two bearings which are spaced apart from one another, **characterised in that** the bearings (8) each have at least one rolling bearing (16), the respective rolling bearing (16) being surrounded on its outer race (18, 44) and/or on its inner race (15, 36, 45) by an elastomer bearing (23, 31, 39).

2. A bearing arrangement according to claim 1, **characterised in that** the rolling bearing (16) is a ball bearing, an angular contact ball bearing, a needle bearing, a roller bearing, a self-aligning radial roller bearing, a tapered roller bearing and/or a barrel roller bearing.

3. A bearing arrangement according to claims 1 or 2, **characterised in that** the rolling bearing (16) is designed in one or more rows.

4. A bearing arrangement according to any one of the preceding claims, **characterised in that** the rolling bearing (16) is single-part or multi-part in construction.

5. A bearing arrangement according to any one of the preceding claims, **characterised in that** the bearing races (15, 36, 45; 18, 44) are divided longitudinally and/or transversely and **in that** the associated bearing cages are divided and/or slotted.

6. A bearing arrangement according to any one of the preceding claims, **characterised in that** a thickening (11) is provided on the stabiliser (1) to fix the rolling bearing (16).

7. A bearing arrangement according to any one of the preceding claims, **characterised in that** plastics material is sprayed on at the bearing point (6, 7) as a bearing seat.

8. A bearing arrangement according to any one of the preceding claims, **characterised in that** a bush (30) is pressed on as a bearing seat prior to bending the stabiliser (1) into its final form.

9. A bearing arrangement according to any one of the preceding claims, **characterised in that** fixing bushes or fixing sleeves (12, 13) are provided for fixing the rolling bearing.

10. A bearing arrangement according to any one of the preceding claims, **characterised in that** instead of an inner bearing race the required number of rolling bearing raceways is incorporated into the surface of the stabiliser (1).

11. A bearing arrangement according to any one of the preceding claims, **characterised in that** the rolling bearing (16) is fixed via a holder (9) or a single-part or a divided rolling bearing outer ring (33; 34a, 34b) provided with flanges.

## Revendications

1. Support d'un stabilisateur de véhicule, ce stabilisateur étant constitué par une barre de torsion dont les bras coudés sont articulés à des parties mobiles du véhicule, tandis que la partie située entre ces bras coudés est montée par au moins deux paliers espacés l'un de l'autre sur une partie fixe du véhicule,
**caractérisé en ce que**
les paliers (8) comportent chacun au moins un roulement (16) entouré le long de sa bague externe (18, 44) et/ou de sa bague interne (15, 36, 45) par un palier en élastomère (23, 31, 39).

2. Support selon la revendication 1,
**caractérisé en ce que**
le roulement (16) est un roulement à billes, un roulement oblique à billes, un roulement à aiguilles, un roulement à rouleaux, un roulement à rouleaux oscillants, un roulement conique et/ou un roulement à tonneaux.

3. Support selon les revendications 1 et 2,
**caractérisé en ce que**
le roulement (16) est à une ou plusieurs rangées.

4. Support selon une des revendications précédentes,
**caractérisé en ce que**
le roulement (16) est en une ou plusieurs parties.

5. Support selon une des revendications précédentes,
**caractérisé en ce que**
les bagues de roulement (15, 36, 45; 18, 44) sont divisées longitudinalement et/ou transversalement et les cages de roulement correspondantes sont divisées et/ou fendues.

6. Support selon une des revendications précédentes,
**caractérisé en ce que**
pour fixer le roulement (6, 16) il est prévu un épaississement (11) sur le stabilisateur (1).

7. Support selon une des revendications précédentes,
**caractérisé en ce que**
la matière plastique aux points de palier (6, 7) est injectée sous la forme de siège de palier.

8. Support selon une des revendications précédentes,
**caractérisé en ce qu'**
une douille (30) servant de siège de palier est amenée par pression à sa forme définitive avant le pliage du stabilisateur (1).

9. Support selon une des revendications précédentes,
**caractérisé en ce qu'**
il est prévu des manchons ou des douilles de serrage (12, 13) pour fixer le roulement.

10. Support selon une des revendications précédentes,
**caractérisé en ce qu'**
à la place de la bague interne de roulement, des pistes de roulement sont usinées à la surface du stabilisateur (1) en nombre nécessaire.

11. Support selon une des revendications précédentes,
**caractérisé en ce que**
la fixation du roulement (16) est assurée par un support (9) ou par une bague externe de roulement (33 ; 34a, 34b) réalisée en une ou plusieurs parties et munie de brides.
